# EUROPEAN PATENT SPECIFICATION

(11) **EP 0 401 847 B1**
(45) Date of publication and mention of the grant of the patent: **13.10.1993**
(21) Application number: 90110874.6
(22) Date of filing: 08.06.1990
(51) Int. Cl.: G01M 15/00, F02D 41/32

(54) **Method and apparatus for controlling engine in engine characteristics test**
Verfahren und Einrichtung zum Steuern einer Brennkraftmaschine während einer Prüfung des Motorkennlinienverlaufs
Procédé et appareil pour commander un moteur sur banc d'essai

(30) Priority: 09.06.1989 JP 145458/89
(43) Date of publication of application: 12.12.1990
(73) Proprietor: KABUSHIKI KAISHA TOSHIBA, Kawasaki-shi, Kanagawa-ken 210 (JP)
(72) Inventor: Seki, Yoshiro, Futyu-shi, Tokyo-to (JP)
(74) Representative: Lehn, Werner, Dipl.-Ing.

(56) References cited:
- EP-A- 0 169 528
- PATENT ABSTRACTS OF JAPAN, vol. 13, no. 287 (M-844), 30th June 1989; & JP-A-1 80 742 (MEIDENSHA) 27-03-1989 (Cat. Y)
- PATENT ABSTRACTS OF JAPAN, vol. 3, no. 151 (M-84), 12th December 1979; & JP-A-54 129 274 (MITSUBISHI) 06-10-1979
- PATENT ABSTRACTS OF JAPAN, vol. 7, no. 50 (M-197), 26th February 1983; & JP-A-57 198 341 (NIHON DENSHI) 04-12-1982

## Description

### BACKGROUND OF THE INVENTION

### Field of the Invention

The present invention relates to a method and an apparatus for controlling the operation of an engine in an engine characteristics test to be performed in an experimental room.

### Description of the Background Art

A test of engine characteristics such as an engine noise or an amount of exhaust is usually conducted inside an experimental room, because of the difficulty of collecting data on a running car, which is carrying an engine.

In such a test, an engine axial torque and a number of revolutions are controlled at prescribed values by adjusting throttle valve opening of the engine and motor meter current of a motor meter associated with the engine.

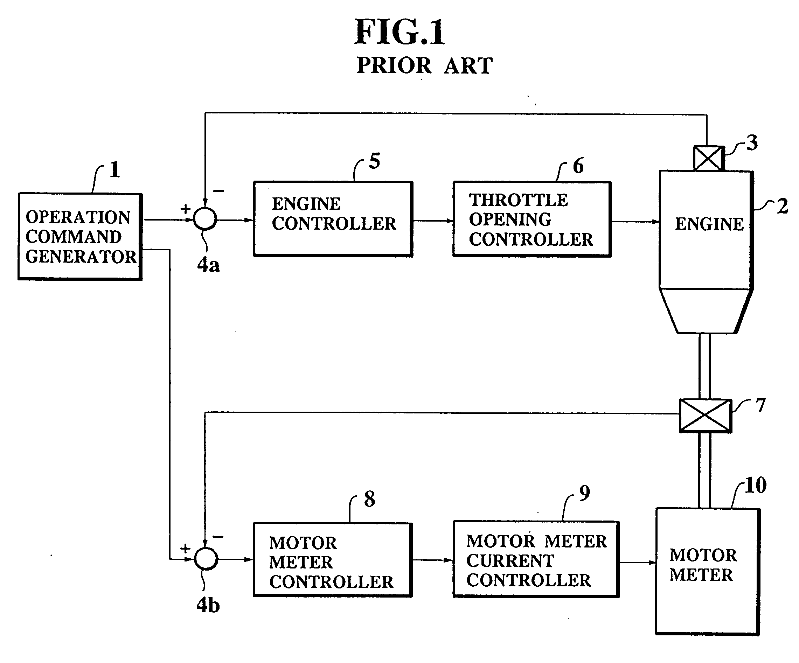

An example of a conventional apparatus for performing such an engine test is shown in Fig. 1.

In this apparatus, an operator enters reference values for the axial torque and the number of revolutions at operation command generator 1, and reference signals indicating these reference values are subsequently given to subtractors 4a and 4b.

Meanwhile, an engine 2 to be tested is equipped with a number of revolutions detector 3 from which a measured value for the number of revolutions is fed back to the subtractor 4a, so that the subtractor 4a calculates a difference between the measured value and the reference value for the number of revolutions.

This difference obtained by the subtractor 4a is then fed to an engine controller 5 which performs a control operation to nullify the difference by generating a throttle valve opening control signal to appropriately adjust a throttle opening controller 6 connected to a throttle valve (not shown) of the engine 2.

On the other hand, the engine 2 is also equipped with an axial torque detector 7 from which a measured value for the axial torque is fed back to the subtractor 4b, so that the subtractor 4b calculates a difference between the measured value and the reference value for the axial torque.

This difference obtained by the subtractor 4b is then fed to a motor meter controller 8 which performs a control operation to nullify the difference by generating a motor meter current control signal to appropriately adjust a motor meter current controller 9 connected to a motor meter 10.

In this manner, the number of revolutions and the axial torque of the engine 2 are adjusted in correspondence with various driving conditions, such that the data concerning characteristics of the engine 2 under various driving conditions can be obtained.

However, in such a conventional apparatus for performing engine test, a system for controlling the number of revolutions by the adjustment of the throttle valve opening, and a system for controlling the axial torque by adjusting the motor meter current are completely independent of each other. In other words, each system is operating as a single-input single-output system, so that it has been impossible to control these systems with mutual interference between these systems taken into account. For this reason, it has been difficult to stabilize the number of revolutions and the axial torque simultaneously, so that a highly accurate test of an engine characteristics has been impossible. PATENT ABSTRACTS OF JAPAN, vol. 3, no. 151 (M-84), 12th December 1979; & JP-A-54 129 274 (MITSUBISHI) 06-10-1979 discloses a forecasting control process employing a PID controller, and a feed-back loop which modifies an original desired value setting means.

### SUMMARY OF THE INVENTION

It is therefore an object of the present invention to provide a method and an apparatus for controlling an engine in an engine characteristics test capable of performing the controlling operations highly accurately by taking mutual interference between more than one control systems into account.

According to one aspect of the present invention there is provided an apparatus for controlling an engine system in an engine characteristics test by optimally controlling at least one controlled variables, by utilizing proportional, integral, and derivative factors, comprising: means for specifying prescribed reference values for the controlled variables; means for sampling measured values for the controlled variables at predetermined sampling timings; means for calculating a controlled parameter from the measured values for the controlled variables; means for calculating controlled variable differences between the measured values of the controlled variables and the prescribed reference values for the controlled variables; means for calculating integral terms from the controlled variable differences and the controlled parameter; means for calculating proportional terms from the controlled parameter and the measured values for the controlled variables; means for obtaining the controlled variables from the integral terms and the proportional terms; and means for controlling the engine in accordance with the obtained controlled variables.

According to another aspect of the present invention there is provided a method of controlling an engine system in an engine characteristics test by optimally controlling at least one controlled variables, by utilizing proportional, integral, and derivative factors, comprising the steps of: specifying prescribed reference values for the controlled variables; sampling measured values for the controlled variables at predetermined sampling timings; calculating a controlled parameter from the measured values for the controlled variables; calculating controlled variable differences between the measured values of the controlled variables and the prescribed reference values for the controlled variables; calculating integral terms from the controlled variable differences and the controlled parameter; calculating proportional terms from the controlled parameter and the measured values for the controlled variables; obtaining the controlled variables from the integral terms and the proportional terms; and controlling the engine in accordance with the obtained controlled variables.

Other features and advantages of the present invention will become apparent from the following description taken in conjunction with the accompanying drawings.

### BRIEF DESCRIPTION OF THE DRAWINGS

Fig. 1 is a schematic block diagram for a conventional apparatus for testing an engine.

Fig. 2 is a schematic block diagram for one embodiment of an apparatus for testing an engine according to the present invention.

Fig. 3 is a flow chart for a part of a control operation to be performed by the apparatus of Fig. 2.

Fig. 4 is a flow chart for another part of a control operation to be performed by the apparatus of Fig. 2.

### DETAILED DESCRIPTION OF THE PREFERRED EMBODIMENTS

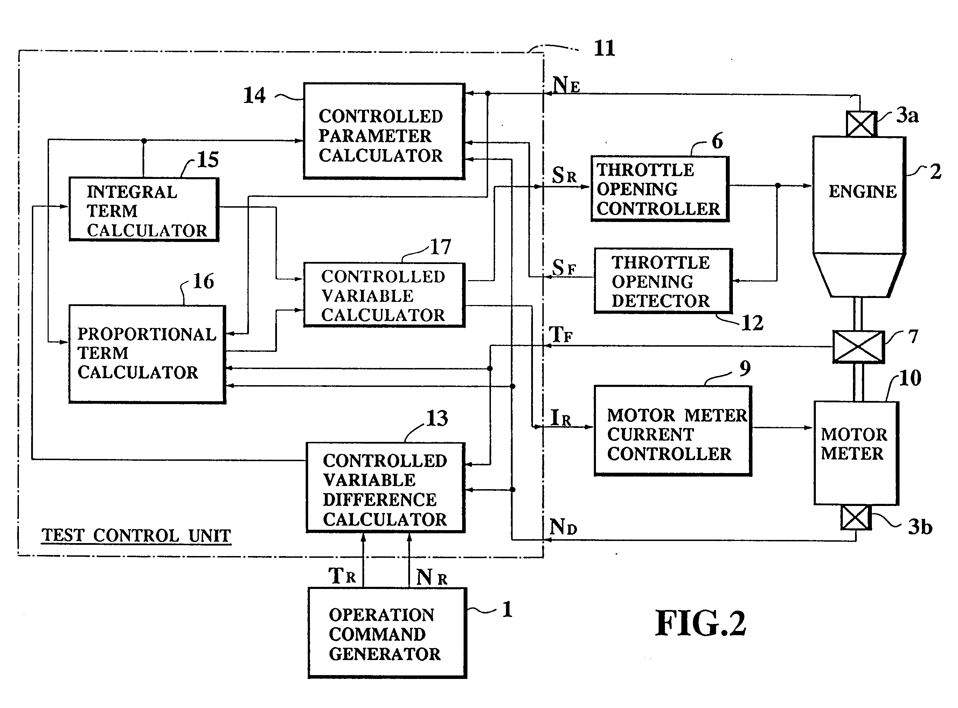

Referring now to Fig. 2, there is shown one embodiment of an apparatus for testing an engine according to the present invention.

In this embodiment, an engine 2 to be tested is equipped with a number of revolutions detector 3a to measure a number of revolutions N_{E} of the engine 2, an axial torque detector 7 for measuring an axial torque T_{F}, a throttle opening controller 6 for adjusting an opening of a throttle valve (not shown) of the engine 2, and a throttle opening detector 12 for measuring an opening of the throttle valve S_{F}. On the other hand, a motor meter 10 connected with the engine 2 is equipped with a number of revolutions detector 3b for measuring a number of revolutions N_{D} of the motor meter 10, and a motor meter current controller 9 for adjusting a motor meter current to be supplied to the motor meter 10.

The number of revolutions N_{E} of the engine 2, the axial torque T_{F}, the opening of the throttle valve S_{F} , and the number of revolutions N_{D} of the motor meter 10 are fed to a test control unit 11, while the throttle opening controller 6 and the motor meter current controller 9 are controlled by a throttle valve opening control value S_{R} and a motor meter current control value I_{R} from the test control unit 11, respectively, which are obtained such that the opening of the throttle valve and the motor meter current are adjusted appropriately to be equal to reference values T_{R} and N_{R} for the opening of the throttle valve and the motor meter current entered by an operator at an operation command generator 1.

The test control unit 11 comprises a controlled variable difference calculator 13 for calculating controlled variable differences between the measured values and the reference values for controlled variables, which in this case are the opening of the throttle valve and the motor meter current; a controlled parameter calculator 14 for calculating a controlled parameter from the measured values of the number of revolutions N_{E} of the engine 2, the opening of the throttle valve S_{F}, and the number of revolutions N_{D} of the motor meter 10 in accordance with a prescribed mathematical model; an integral term calculator 15 for calculating an integral term for PID (proportional-integral-derivative) type control from the controlled parameter obtained by the controlled parameter calculator 14 and the controlled variable differences obtained by the controlled variable difference calculator 13; a proportional term calculator 16 for calculating a proportional term for PID type control from the controlled parameter obtained by the controlled parameter calculator 14, the measured values of the number of revolutions N_{E} of the engine 2, the opening of the throttle valve S_{F}, and the number of revolutions N_{D} of the motor meter 10; and a controlled variable calculator 17 for calculating the throttle valve opening control value S_{R} and a motor meter current control value I_{R} from the integral term and the proportional term.

Now, the mathematical model to be use in this embodiment will be described in detail.

In this embodiment, a system of the engine 2 and the motor meter 10 is expressed by a model given by the following equations (1) to (8):$\text{dX/dt =} \text{A·X + B·U}$$\text{Y} \text{=} \text{C·X}$ 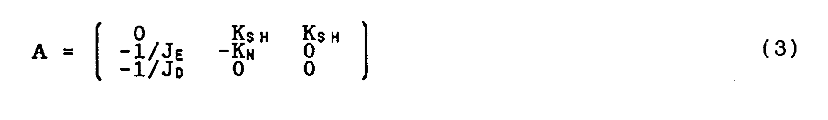 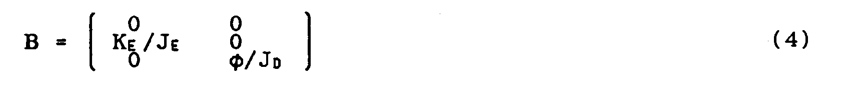 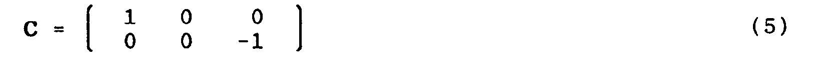 $\text{X} {\text{= ( T}}_{\text{SH}} {\text{N}}_{\text{E}} {\text{N}}_{\text{D}} {\text{)}}^{\text{T}}$$\text{U} {\text{= ( S}}_{\text{R}} {\text{I}}_{\text{R}} {\text{)}}^{\text{T}}$$\text{Y} {\text{= ( T}}_{\text{SH}} {\text{N}}_{\text{D}} {\text{)}}^{\text{T}}$
where T_{SH} is the axial torque of the engine 2, N_{E} is the measured number of revolutions of the engine 2, N_{D} is the measured number of revolutions of the motor meter 10, S_{R} is the throttle valve opening control value, I_{R} is the motor meter current control value, K_{SH} is a torsional rigidity coefficient of a connecting axle, J_{E} is a moment of inertia of the engine 2, K_{N} is a coefficient indicating a variation of generated engine torque corresponding to a variation of the number of revolutions of the engine 2, K_{E} is a coefficient indicating a variation of generated engine torque corresponding to a variation of the throttle valve opening, φ is a back electromotive force coefficient of the motor meter 10, and J_{D} is a moment of inertia of the motor meter 10.

Here, a vector U given by the equation (7) above can also be expressed by using the controlled parameter **K**_{D} as follows:$\text{d} \text{U} \text{/dt = -} {\text{K}}_{\text{D}} \text{·} {\text{X}}_{\text{D}}$
where${\text{X}}_{\text{D}} \text{= ( d} {\text{X}}^{\text{T}} \text{/dt(} \text{Y} \text{-} \text{R} {\text{)}}^{\text{T}} {\text{)}}^{\text{T}}$
in which R represents a prescribed reference value for the controlled parameter **K**_{D}.

Now, an inverse problem of a linear optimal control is to obtain a state feedback which minimizes a function for evaluating a response of the engine 2, which is explained in detail in T. Fujii, "New approach to the LQ design from the viewpoint of the inverse regulator problem", IEEE transactions on automatic control, Vol. AC-32, No. 11, November 1987. According to this reference, the controlled parameter **K**_{D} appearing in the equation (9) above can be expressed in terms of an appropriate regular matrix **V**, a regular constant diagonal **Σ** = diag(**σ**₁, **σ**₂), and an appropriate matrix **F** as follows:${\text{K}}_{\text{D}} \text{=} \text{V} \text{⁻¹·} \text{Σ·V·} \text{(} \text{F} \text{I} \text{)} \text{·Γ} \text{⁻¹}$
where

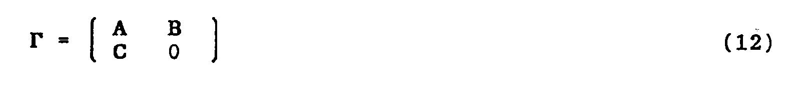

When this theory is applied to the model described by the equations (1) and (2) above, the controlled parameter **K**_{D} can be expressed as follows: 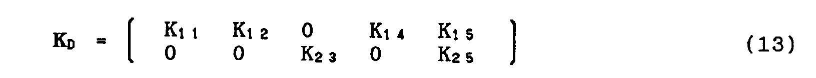 ${\text{K₁₁ = f₁₁ (J}}_{\text{E}} {\text{, K}}_{\text{SH}} {\text{, K}}_{\text{E}} {\text{, W}}_{\text{C.TC}} \text{)}$${\text{K₁₂ = f₁₂ (J}}_{\text{E}} {\text{, K}}_{\text{E}} \text{)}$${\text{K₁₄ = f₁₄ (J}}_{\text{E}} {\text{, K}}_{\text{SH}} {\text{, K}}_{\text{E}} {\text{, W}}_{\text{C.TC}} \text{)}$${\text{K₁₅ = f₁₅ (J}}_{\text{E}} {\text{, K}}_{\text{E}} {\text{, W}}_{\text{C.SC}} \text{)}$${\text{K₂₃ = f₂₃ (J}}_{\text{D}} \text{, φ)}$${\text{K₂₅ = f₂₅ (J}}_{\text{E}} {\text{, φ, W}}_{\text{C.SC}} \text{)}$
where W_{C.TC} is a target response of the torque control, W_{C.SC} is a target response of the number of revolutions control, and f( ) designates an appropriate function of the arguments inside the bracket.

The controlled parameter **K**_{D} so obtained, however, is applicable only to an object to be controlled which possesses a linear characteristic, so that it is not directly applicable to the engine 2, whose response characteristic is known to be nonlinear.

Nevertheless, by specifying a coefficient K_{E}, which is a coefficient indicating a variation of generated engine torque corresponding to a variation of the throttle valve opening, and a coefficient **φ**, which is a back electromotive force coefficient of the motor meter 10, both of which vary in accordance with the nonlinear characteristic of the engine 2, the controlled parameter **K**_{D} can be determined.

In this embodiment, the coefficient K_{E} is determined from a static characteristic of the engine 2 as follows. Namely, the generated engine torque T_{E} can be given as a function of the throttle valve opening S_{F} and the number of revolutions N_{E} of the engine 2 by the following expression:${\text{T}}_{\text{E}} {\text{= f(N}}_{\text{E}} {\text{, S}}_{\text{F}} \text{)}$
which can be determined from the designed values or the measured values. Then, the coefficient K_{E} can be obtained from this generated engine torque T_{E} by using the following expression:${\text{K}}_{\text{E}} {\text{= {f(N}}_{\text{E}} {\text{, S}}_{\text{F}} {\text{+a) - f(N}}_{\text{E}} {\text{, S}}_{\text{F}} \text{-a)}/(2} \text{·} \text{a)}$
where a is a constant. Thus, the coefficient K_{E} indicating a variation of generated engine torque corresponding to a variation of the throttle valve opening can be determined from the throttle valve opening S_{F} and the number of revolutions N_{E} of the engine 2.

As for the back electromotive force coefficient **φ** of the motor meter 10, this can be determined from the number of revolutions N_{D} of the motor meter 10 as follows. Namely, the back electromotive force coefficient φ can be given by:$\text{φ} {\text{= f(N}}_{\text{D}} {\text{, P, I}}_{\text{B}} \text{)}$
where N_{D} is the number of revolutions of the motor meter 10, P is a rated capacity of the motor meter 10, and I_{B} is a rated current of the motor meter 10. Since the rated capacity P and the rated current I_{B} are constant values, the back electromotive force coefficient φ can be determined once the number of revolutions N_{D} of the motor meter 10 is known.

Thus, putting these together, the controlled parameter **K**_{D} can be determined from the throttle valve opening S_{F}, the number of revolutions N_{E} of the engine 2, and the number of revolutions N_{D} of the motor meter 10.

In accordance with this model, the apparatus of Fig. 2 operates as follows.

First, as the operation begins, the number of revolutions N_{E} of the engine 2 detected by the number of revolutions detector 3a, the axial torque T_{F} detected by the axial torque detector 7, the opening of the throttle valve S_{F} detected by the throttle opening detector 12, and the number of revolutions N_{D} of the motor meter 10 detected by the number of revolutions detector 3b are fed to a test control unit 11, which are taken into the test control unit 11 at predetermined sampling timings.

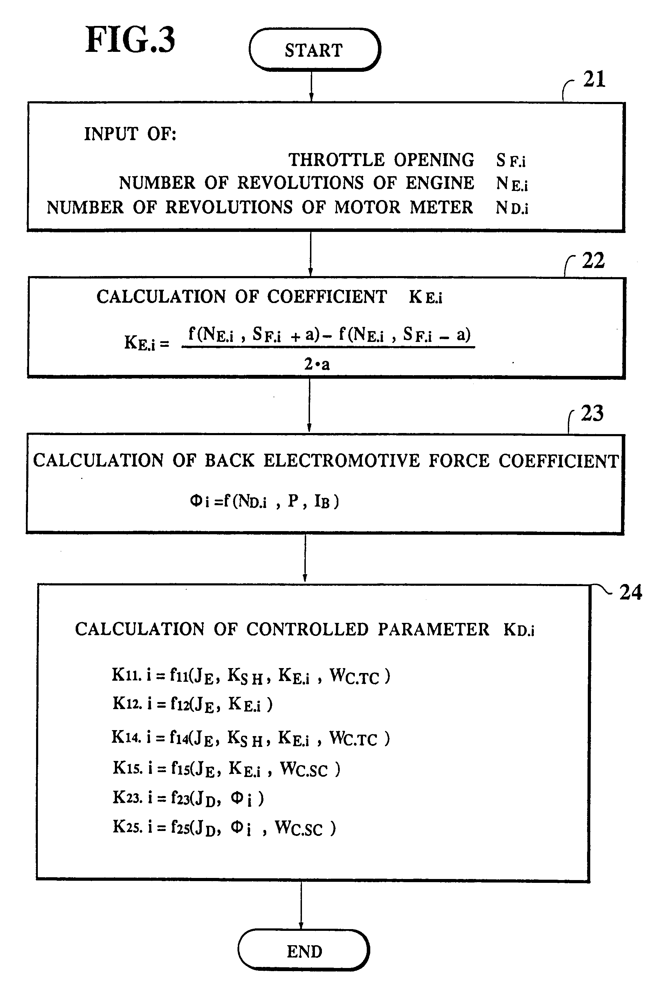

Then, in the test control unit 11, the controlled parameter calculator 14 calculates the controlled parameter **K**_{D} _{,i} for the i-th sampling timing according to the flow chart of Fig. 3, as follows.

First, at the step 21, the number of revolutions N_{E} _{,i} of the engine 2, the opening of the throttle valve S_{F , i} , and the number of revolutions N_{D ,i} of the motor meter 10 at the i-th sampling timing are taken in.

Then, at the steps 22 and 23, these values for N_{E. i} , S_{F, i} , and N_{D, i} are substituted into the equations (16) and (17), respectively, so as to obtain the coefficient K_{E, i} indicating a variation of generated engine torque corresponding to a variation of the throttle valve opening, and the back electromotive force coefficient **φ**ᵢ of the motor meter 10, respectively.

Then, at the step 24, the obtained coefficients K_{E,i} and **φ**ᵢ are substituted into the equations (14a) to (14f), so as to obtain the elements K_{11, i}, K_{12, i} , K_{14, i} , K_{15, i} , K_{23, i} , and K_{25, i} of the controlled parameter **K**_{D, i} .

The controlled parameter **K**_{D, i} so obtained is subsequently fed to the integral term calculator 15 and the proportional term calculator 16.

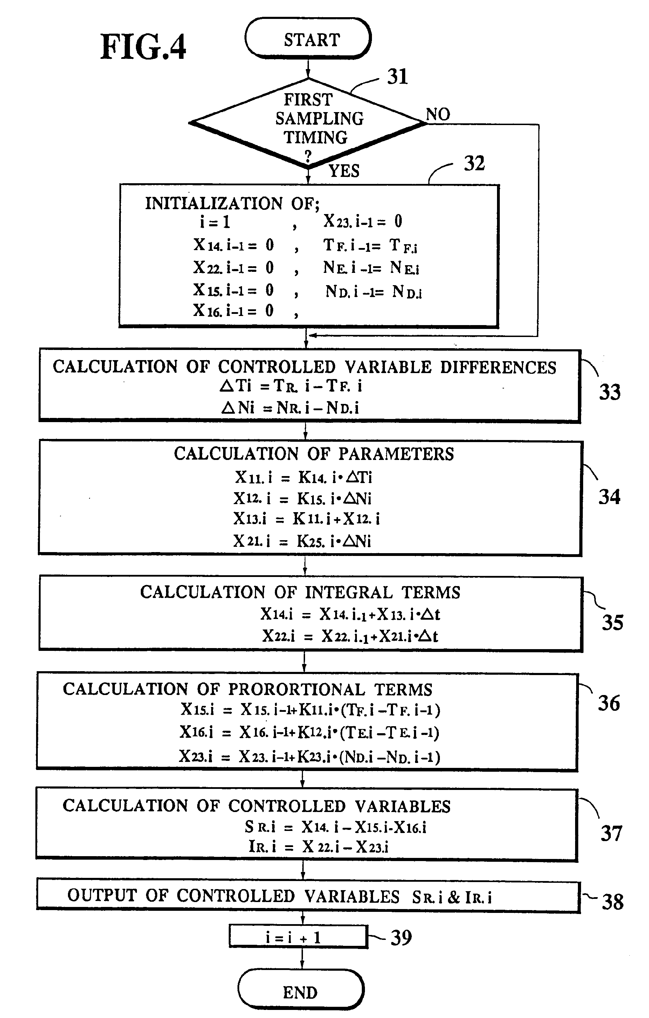

From this controlled parameter **K**_{D, i} , the throttle valve opening control value S_{R, i} and the motor meter current control value I_{R, i} are obtained by the test control unit 11, according to the flow chart of Fig. 4, as follows.

First, if it is determined to be the first sampling timing at the step 31, then at the step 32, various data to be used are initialized to initial values as follows: 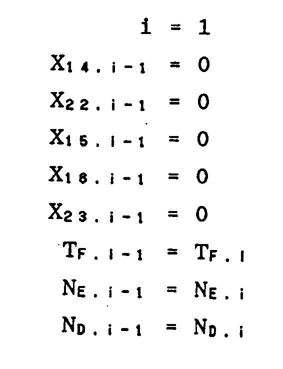
where X₁₄, X₂₂, X₁₅, X₁₆, and X₂₃ are parameters to be utilized in a course of the subsequent calculations. If it is not the first sampling timing, this initialization at the step 32 is skipped.

Next, at the step 33, a torque difference ΔTᵢ and a number of revolutions difference ΔNᵢ are calculated by the controlled variable difference calculator 13 from the reference values N_{R,i} and T_{R,i} for the number of revolutions and the axial torque entered from the operation command generator 1 and the measured values of the number of revolutions N_{D,i} of the motor meter 10 and the axial torque T_{F,i} , as follows:${\text{ΔT}}_{\text{i}} {\text{= T}}_{\text{R.i}} {\text{- T}}_{\text{F.i}}$${\text{ΔN}}_{\text{i}} {\text{= N}}_{\text{R.i}} {\text{- N}}_{\text{D.i}}$

These differences obtained are then fed to the integral term calculator 15, at which the parameters X_{11,i} , X_{12,i} , X_{13,i} , and X_{21,i} are calculated at the step 34 as follows:${\text{X}}_{\text{11.i}} {\text{= K}}_{\text{14.i}} {\text{·ΔT}}_{\text{i}}$${\text{X}}_{\text{12.i}} {\text{= K}}_{\text{15.i}} {\text{·ΔN}}_{\text{i}}$${\text{X}}_{\text{13.i}} {\text{= X}}_{\text{11.i}} {\text{+X}}_{\text{12.i}}$${\text{X}}_{\text{21.i}} {\text{= K}}_{\text{25.i}} {\text{·ΔN}}_{\text{i}}$
from which the parameters X_{14,i} and X_{22,i} are also obtained by the integral term calculator 15 at the step 35 as follows:${\text{X}}_{\text{14.i}} {\text{= X}}_{\text{14.i-1}} {\text{+X}}_{\text{13.i}} \text{·Δt}$${\text{X}}_{\text{22.i}} {\text{= X}}_{\text{22.i-1}} {\text{+X}}_{\text{21.i}} \text{·Δt}$
where Δt is a control period.

The parameter X_{14,i} obtained by the equation (24) and the parameter X_{22,i} obtained by the equation (25) are then fed to the controlled variable calculator 17 as the integral terms for the throttle valve opening control value S_{R,i} and the motor meter current control value I_{R,i} , respectively.

On the other hand, at the step 36, the proportional term calculator 16 calculates the parameters X_{15,i} , X_{16,i} , and X_{23,i} from the measured values of the number of revolutions N_{E,i} of the engine 2, the axial torque T_{F,i} , and the number of revolutions N_{D,i} of the motor meter 10 as follows:${\text{X}}_{\text{15.i}} {\text{= X}}_{\text{15.i-1}} {\text{+K}}_{\text{11.i}} {\text{·(T}}_{\text{F.i}} {\text{-T}}_{\text{F.i-1}} \text{)}$${\text{X}}_{\text{16.i}} {\text{= X}}_{\text{16.i-1}} {\text{+K}}_{\text{12.i}} {\text{·(N}}_{\text{E.i}} {\text{-N}}_{\text{E.i-1}} \text{)}$${\text{X}}_{\text{23.i}} {\text{= X}}_{\text{23.i-1}} {\text{+K}}_{\text{23.i}} {\text{·(N}}_{\text{D.i}} {\text{-N}}_{\text{D.i-1}} \text{)}$

The parameters X_{15,i} and X_{16,i} obtained by the equations (26) and (27), and the parameter X_{23,i} obtained by the equation (28) are then fed to the controlled variable calculator 17 as the proportional terms for the throttle valve opening control value S_{R,i} and the motor meter current control value I_{R,i} , respectively.

It is noted that in the equations (26) to (28), the proportional terms are obtained from the difference between the current sampling data and the previous sampling data, so that the nonlinearity of the engine 2 can be taken into account.

Next, at the step 37, the controlled variable calculator 17 calculates the throttle valve opening control value S_{R,i} and the motor meter current control value I_{R,i} from the integral terms from the integral term calculator 15 and the proportional terms from the proportional term calculator 16 as follows:${\text{S}}_{\text{R.i}} {\text{= X}}_{\text{14.i}} {\text{-X}}_{\text{15.i}} {\text{-X}}_{\text{16.i}}$${\text{I}}_{\text{R.i}} {\text{= X}}_{\text{22.i}} {\text{-X}}_{\text{23.i}}$

The throttle valve opening control value S_{R, i} and the motor meter current control value I_{R,i} so obtained are then fed to the throttle opening controller 6 and the motor meter current controller 9, respectively, at the step 38, and the value of a suffix i labelling the sampling timing is increased by one at the step 39 in order to prepare for the next sampling timing.

As a result, the throttle of the engine 2 is controlled by the throttle opening controller 6 in accordance with the throttle valve opening control value S_{R,i} , while the motor meter 10 is controlled by the motor meter current controller 9 in accordance with the motor meter current control value I_{R,i} , such that the number of revolution and the axial torque of the engine 2 is controlled to be equal to the reference values specified at the operation command generator 1.

Thus, in this embodiment, the system of the engine 2 and the motor meter 10 is controlled as a two-inputs two-outputs system, using the number of revolutions of the motor meter 10 and the axial torque of the engine 2 as two of the inputs, and the throttle valve opening and the motor meter current as two of the outputs. Consequently, a mutual interference between two controlled variables of the throttle valve opening and motor meter current can be avoided, so that a stable control operation becomes possible.

Moreover, because the controlled variables are calculated with the nonlinearity of the engine 2 fully taken into account, the number of revolutions and the axial torque can be controlled at the sufficiently high accuracy required by the engine test.

Furthermore, according to this embodiment, the controlled parameter can be determined from the characteristics of the engine 2 and the motor meter 10, so that the manual operation such as an initial adjustment associated with the replacement of the engine 2 to be tested can be reduced.

Now, in the above embodiment, the number of revolutions of the engine 2 is measured. However, this may be replaced by an estimated number of revolutions N_{E.E} of the engine 2 which can be obtained from the measured values for the axial torque T_{F} and the number of revolutions N_{D} of the motor meter 10, and the torsional rigidity coefficient K_{SH} of the connecting axle, as follows:${\text{N}}_{\text{E.E}} {\text{= (dT}}_{\text{F}} {\text{/dt)·(1/K}}_{\text{SH}} {\text{)+N}}_{\text{D}}$

Thus, the above embodiment may be simplified by using this estimated number of revolutions N_{E.E} of the engine 2 instead of the measured value of the number of revolution N_{E} of the engine 2.

Here, because the torsional rigidity coefficient K_{SH} of the connecting axle is usually vary large, so that the measured value of the number of revolutions N_{D} of the motor meter 10 may be taken as the estimated number of revolutions N_{E.E} of the engine 2 by simply ignoring the first term in the equation (31), without sacrificing the accuracy too much.

It is to be noted that by increasing the number of inputs and outputs, the above embodiment can readily be extended to multi-inputs multi-outputs system.

Besides these, many modifications and variations of the above embodiments may be made without departing from the novel and advantageous features of the present invention. Accordingly, all such modifications and variations are intended to be included within the scope of the appended claims.

## Claims

1. An apparatus for controlling an engine system in an engine characteristics test by optimally controlling at least one controlled variables, by utilizing proportional, integral, and derivative factors, comprising:
means for specifying prescribed reference values for the controlled variables;
means for sampling measured values for the controlled variables at predetermined sampling timings;
means for calculating a controlled parameter from the measured values for the controlled variables;
means for calculating controlled variable differences between the measured values of the controlled variables and the prescribed reference values for the controlled variables;
means for calculating integral terms from the controlled variable differences and the controlled parameter;
means for calculating proportional terms from the controlled parameter and the measured values for the controlled variables;
means for obtaining the controlled variables from the integral terms and the proportional terms; and
means for controlling the engine in accordance with the obtained controlled variables.

2. The apparatus of claim 1, wherein the engine system comprises an engine having a throttle valve and a motor meter; the prescribed reference values are specified for a number of revolutions of the motor meter and an axial torque of the engine; the measured values are taken for a number of revolutions of the engine, the axial torque of the engine, the number of revolutions of the motor meter, and the throttle valve opening; the controlled parameter is calculated from the measured values for the throttle valve opening and the number of revolutions of the engine; the controlled variable differences are calculated between the measured values and the prescribed reference values for the axial torque and the number of revolutions of the motor meter; and the proportional terms are calculated from the measured values for the axial torque, number of revolutions of the engine, and number of revolutions of the motor meter.

3. The apparatus of claim 1, wherein the means for calculating integral terms calculates the integral terms by first multiplying the controlled variable differences and the controlled parameter, and then integrating; the means for calculating proportional terms calculates the proportional terms by multiplying the controlled parameter and differences of the measured values for the controlled variables between current sampling and previous sampling; and the means for obtaining the controlled variables obtains the controlled variables by adding the integral terms and the proportional terms.

4. The apparatus of claim 1, wherein the engine system comprises an engine having a throttle valve and a motor meter; the prescribed reference values are specified for a number of revolutions of the motor meter and an axial torque of the engine; the measured values are taken for the axial torque of the engine, the number of revolutions of the motor meter, and the throttle valve opening; a number of revolutions of the engine is estimated from the measured values of the axial torque and the number of revolutions of the motor meter, the controlled parameter is calculated from the measured value for the throttle valve opening and the estimated value of the number of revolutions of the engine; the controlled variable differences are calculated between the measured values and the prescribed reference values for the axial torque and the number of revolutions of the motor meter; and the proportional terms are calculated from the measured values for the axial torque and the number of revolutions of the motor meter, and the estimated value of the number of revolutions of the engine.

5. A method of controlling an engine system in an engine characteristics test by optimally controlling at least one controlled variables, by utilizing proportional, integral, and derivative factors, comprising the steps of:
specifying prescribed reference values for the controlled variables;
sampling measured values for the controlled variables at predetermined sampling timings;
calculating a controlled parameter from the measured values for the controlled variables;
calculating controlled variable differences between the measured values of the controlled variables and the prescribed reference values for the controlled variables;
calculating integral terms from the controlled variable differences and the controlled parameter;
calculating proportional terms from the controlled parameter and the measured values for the controlled variables;
obtaining the controlled variables from the integral terms and the proportional terms; and
controlling the engine in accordance with the obtained controlled variables.

6. The method of claim 5, wherein the engine system comprises an engine having a throttle valve and a motor meter; the prescribed reference values are specified for a number of revolutions of the motor meter and an axial torque of the engine; the measured values are taken for a number of revolutions of the engine, the axial torque of the engine, the number of revolutions of the motor meter, and the throttle valve opening; the controlled parameter is calculated from the measured values for the throttle valve opening and the number of revolutions of the engine; the controlled variable differences are calculated between the measured values and the prescribed reference values for the axial torque and the number of revolutions of the motor meter; and the proportional terms are calculated from the measured values for the axial torque, number of revolutions of the engine, and number of revolutions of the motor meter.

7. The method of claim 5, wherein the integral terms are calculated by first multiplying the controlled variable differences and the controlled parameter, and then integrating; the proportional terms are calculated by multiplying the controlled parameter and differences of the measured values for the controlled variables between current sampling and previous sampling; and the controlled variables are obtained by adding the integral terms and the proportional terms.

8. The method of claim 5, wherein the engine system comprises an engine having a throttle valve and a motor meter; the prescribed reference values are specified for a number of revolutions of the motor meter and an axial torque of the engine; the measured values are taken for the axial torque of the engine, the number of revolutions of the motor meter, and the throttle valve opening; a number of revolutions of the engine is estimated from the measured values of the axial torque and the number of revolutions of the motor meter, the controlled parameter is calculated from the measured value for the throttle valve opening and the estimated value of the number of revolutions of the engine; the controlled variable differences are calculated between the measured values and the prescribed reference values for the axial torque and the number of revolutions of the motor meter; and the proportional terms are calculated from the measured values for the axial torque and the number of revolutions of the motor meter, and the estimated value of the number of revolutions of the engine.

## Patentansprüche

1. Vorrichtung zum Steuern eines Motorensystems in einem Motorencharakteristiktest durch optimales Steuern von zumindest einer gesteuerten Variablen unter Benutzung von proportionalen, integralen und differentiellen Faktoren mit:
einer Einrichtung zum Spezifizieren vorgeschriebener Referenzwerte für die gesteuerten Variablen;
einer Einrichtung zum Abtasten gemessener Werte für die gesteuerten Variablen zu vorbestimmten Abtastzeitpunkten;
einer Einrichtung zum Berechnen gesteuerter Parameters aus den gemessenen Werten für die gesteuerten Variablen;
einer Einrichtung zum Berechnen von Differenzen der gesteuerten Variablen zwischen den gemessenen Werten der gesteuerten Variablen und den vorgeschriebenen Referenzwerten für die gesteuerten Variablen;
einer Einrichtung zum Berechnen von integralen Termen für aus den Differenzen der gesteuerten Variablen und den gesteuerten Parameter;
einer Einrichtung zum Berechnen von proportionalen Termen aus dem gesteuerten Parameter und den gemessenen Werten für die gesteuerten Variablen;
einer Einrichtung zum Erhalten der gesteuerten Variablen aus den integralen Termen und den proportionalen Termen; und
einer Einrichtung zum Steuern des Motors in Übereinstimmung mit den erhaltenen gesteuerten Variablen.

2. Vorrichtung nach Anspruch 1,
dadurch **gekennzeichnet**, daß das Motorensystem einen Motor mit einem Drosselventil und einem Motorenmeßgerät umfaßt; die vorgeschriebenen Referenzwerte spezifiziert sind für eine Anzahl von Umdrehungen des Motorenmeßgeräts und ein axiales Drehmoment des Motors; die gemessenen Werte genommen werden für eine Anzahl von Umdrehungen des Motors, das axiale Drehmoment des Motors, die Anzahl von Umdrehungen des Motorenmeßgeräts und die Drosselventilöffnung; der gesteuerte Parameter berechnet wird aus den gemessenen Werten für die Drosselventilöffnung und die Anzahl von Umdrehungen des Motors; die Differenzen gesteuerter Variablen berechnet werden zwischen gemessenen Werten und vorgeschriebenen Referenzwerten für das axiale Drehmoment und die Anzahl von Umdrehungen des Motorenmeßgeräts; und die proportionalen Terme berechnet werden aus den gemessenen Werten für das axiale Drehmoment, Anzahl von Umdrehungen des Motors und Anzahl von Umdrehungen des Motorenmeßgeräts.

3. Vorrichtung nach Anspruch 1,
dadurch **gekennzeichnet**, daß die Einrichtung zum Berechnen integraler Terme die integralen Terme durch zunächst Multiplizieren von Differenzen gesteuerter Variablen und dem gesteuerten Parameter und dann Integrieren durchführt; die Einrichtung zum Berechnen proportionaler Terme die proportionalen Terme durch Multiplizieren des gesteuerten Parameters und Differenzen der gemessenen Werte für die gesteuerten Variablen zwischen einem momentanen Abtasten und einem vorherigen Abtasten berechnet; und die Einrichtung zum Erhalten der gesteuerten Variablen die gesteuerten Variablen durch Addieren der integralen Terme und der proportionalen Terme erhält.

4. Vorrichtung nach Anspruch 1,
dadurch **gekennzeichnet**, daß das Motorensystem einen Motor mit einem Drosselventil und einem Motorenmeßgerät umfaßt; die vorgeschriebenen Referenzwerte spezifiziert sind für eine Anzahl von Umdrehungen des Motorenmeßgeräts und ein axiales Drehmoment des Motors; die gemessenen Werte genommen werden für das axiale Drehmoment des Motors, die Anzahl von Umdrehungen des Motorenmeßgeräts und die Drosselventilöffnung; eine Anzahl von Umdrehungen des Motors geschätzt wird aus den gemessenen Werten des axialen Drehmoments und der Anzahl von Umdrehungen des Motorenmeßgeräts, der gesteuerte Parameter berechnet wird aus dem gemessenen Wert für die Drosselventilöffnung und dem geschätzten Wert der Anzahl von Umdrehungen des Motors; die Differenzen gesteuerter Variablen berechnet werden zwischen den gemessenen Werten und den vorgeschriebenen Referenzwerten für das axiale Drehmoment und die Anzahl von Umdrehungen des Motorenmeßgeräts; und die proportionalen Terme berechnet werden aus den gemessenen Werten für das axiale Drehmoment und die Anzahl von Umdrehungen des Motorenmeßgeräts und dem geschätzten Wert der Anzahl von Umdrehungen des Motors.

5. Verfahren zum Steuern eines Motorensystems in einem Motorencharakteristiktest durch optimales Steuern von zumindest einer gesteuerten Variablen unter Benutzung proportionaler, integraler und differentieller Faktoren mit den Schritten:
Spezifizieren vorgeschriebener Referenzwerte für die gesteuerten Variablen;
Abtasten gemessener Werte für die gesteuerten Variablen zu vorbestimmten Abtastzeitpunkten;
Berechnen eines gesteuerten Parameters aus den gemessenen Werten für die gesteuerten Variablen;
Berechnen von Differenzen einer gesteuerten Variablen zwischen den gemessenen Werten der gesteuerten Variablen und den vorgeschriebenen Referenzwerten für die gesteuerten Variablen;
Berechnen integraler Terme aus den Differenzen gesteuerter Variablen und dem gesteuerten Parameter;
Berechnen proportionaler Terme aus dem gesteuerten Parameter und den gemessenen Werten für die gesteuerten Variablen;
Erhalten der gesteuerten Variablen aus den integralen Termen und den proportionalen Termen; und
Steuern des Motors in Übereinstimmung mit den erhaltenen gesteuerten Variablen.

6. Verfahren nach Anspruch 5,
dadurch **gekennzeichnet**, daß das Motorensystem einen Motor mit einem Drosselventil und einem Motorenmeßgerät umfaßt; die vorgeschriebenen Referenzwerte spezifiziert werden für eine Anzahl von Umdrehungen des Motorenmeßgeräts und ein axiales Drehmoment des Motors; die Meßwerte genommen werden für eine Anzahl von Umdrehungen des Motors, das axiale Drehmoment des Motors, die Anzahl von Umdrehungen des Motorenmeßgeräts und die Drosselventilöffnung; der gesteuerte Parameter berechnet wird aus den gemessenen Werten für die Drosselventilöffnung die Anzahl von Umdrehungen des Motors; die Differenzen gesteuerter Variablen berechnet werden zwischen den gemessenen Werten und den vorgeschriebenen Referenzwerten für das axiale Drehmoment und die Anzahl von Umdrehungen des Motorenmeßgeräts; und die proportionalen Termen berechnet werden aus den gemessenen Werten für das axiale Drehmoment, Anzahl von Umdrehungen des Motors und Anzahl von Umdrehungen des Motorenmeßgeräts.

7. Verfahren nach Anspruch 5,
dadurch **gekennzeichnet**, daß die integralen Terme berechnet werden durch zunächst Multiplizieren der Differenzen der gesteuerten Variablen und dem gesteuerten Parameter und dann Integrieren; die proportionalen Terme berechnet werden durch Multiplizieren des gesteuerten Parameters und Differenzen der gemessenen Werte für die gesteuerten Variablen zwischen einem momentanen Abtasten und einem vorhergehenden Abtasten; und die gesteuerten Variablen erhalten werden durch Addieren der integralen Terme und der proportionalen Terme.

8. Verfahren nach Anspruch 5,
dadurch **gekennzeichnet**, daß das Motorensystem einen Motor mit einem Drosselventil und einem Motorenmeßgerät umfaßt; die vorgeschriebenen Referenzwerte spezifiziert werden für eine Anzahl von Umdrehungen des Motorenmeßgeräts und ein axiales Drehmoment des Motors; die gemessenen Werte genommen werden für das axiale Drehmoment des Motors, die Anzahl von Umdrehungen des Motorenmeßgeräts und die Drosselventilöffnung; eine Anzahl von Umdrehungen des Motors geschätzt wird aus den gemessenen Werten des axialen Drehmoments und der Anzahl von Umdrehungen des Motorenmeßgeräts, der gesteuerte Parameter berechnet wird aus dem gemessenen Wert für die Drosselventilöffnung und den geschätzten Wert der Anzahl von Umdrehungen des Motors; die Differenzen der gesteuerten Variablen berechnet werden zwischen den gemessenen Werten und den vorgeschriebenen Referenzwerten für das axiale Drehmoment und die Anzahl von Umdrehungen des Motorenmeßgeräts; und die proportionalen Terme berechnet werden aus den gemessenen Werten für das axiale Drehmoment und die Anzahl von Umdrehungen des Motorenmeßgeräts und dem geschätzten Wert der Anzahl von Umdrehungen des Motors.

## Revendications

1. Appareil pour commander un système moteur pendant un essai des caractéristiques du moteur en commandant de manière optimale au moins une des variables commandées, par l'utilisation des facteurs proportionnel, intégral et différentiel, comprenant :
un moyen pour spécifier des valeurs de référence prescrites pour les variables commandées ;
un moyen pour échantillonner les valeurs mesurées pour les variables commandées à des moments d'échantillonnage prédéterminés ;
un moyen pour calculer un paramètre commandé à partir des valeurs mesurées pour les variables commandées ;
un moyen pour calculer les différences des variables commandées entre les valeurs mesurées des variables commandées et les valeurs de référence prescrites pour les variables commandées ;
un moyen pour calculer les termes d'intégrale à partir des différences des variables commandées et du paramètre commandé ;
un moyen pour calculer les termes proportionnels à partir du paramètre commandé et des valeurs mesurées pour les variables commandées ;
un moyen pour obtenir les variables commandées à partir des termes d'intégrale et des termes proportionnels, et
un moyen pour commander le moteur en conformité avec les variables commandées obtenues.

2. Appareil selon la revendication 1, dans lequel le système moteur comprend un moteur ayant un papillon et un dispositif de mesure du moteur ; les valeurs de référence prescrites sont spécifiées pour un nombre de tours du dispositif de mesure du moteur et un couple axial du moteur ; les valeurs mesurées sont prélevées pour un nombre de tours du moteur, le couple axial du moteur, le nombre de tours du dispositif de mesure du moteur, et l'ouverture du papillon ; le paramètre commandé est calculé à partir des valeurs mesurées de l'ouverture du papillon et du nombre de tours du moteur ; les différences des variables commandées sont calculées entre la valeur mesurée et la valeur de référence prescrite du couple axial, et du nombre de tours du dispositif de mesure du moteur, et les termes proportionnels sont calculés à partir des valeurs mesurées, du couple axial, du nombre de tours du moteur et du nombre de tours du dispositif de mesure du moteur.

3. Appareil selon la revendication 1, dans lequel le moyen pour calculer les termes d'intégrale calcule le terme intégral en multipliant tout d'abord une différence des variables commandées et du paramètre commandé, et en effectuant l'intégration ensuite ; le moyen pour calculer les termes proportionnels calcule les termes proportionnels en multipliant le paramètre commandé et les différences des valeurs mesurées pour les variables commandées entre l'échantillonnage actuel et l'échantillonnage précédent ; et le moyen pour obtenir les variables commandées obtient les variables commandées en ajoutant les termes d'intégrale et les termes proportionnels.

4. Appareil selon la revendication 1, dans lequel le système moteur comprend un moteur ayant un papillon et un dispositif de mesure du moteur ; les valeurs de référence prescrites sont spécifiées pour un nombre de tours du dispositif de mesure du moteur et un couple axial du moteur ; les valeurs mesurées sont prélevées pour le couple axial du moteur, le nombre de tours du dispositif de mesure du moteur et l'ouverture du papillon ; un nombre de tours du moteur est estimé à partir des valeurs mesurées du couple axial et du nombre de tours du dispositif de mesure du moteur, le paramètre commandé est calculé à partir de la valeur mesurée pour l'ouverture du papillon et la valeur estimée du nombre de tours du moteur ; les différences des variables commandées sont calculées entre les valeurs mesurées et les valeurs de référence prescrites pour le couple axial et le nombre de tours du dispositif de mesure du moteur ; et les termes proportionnels sont calculés à partir des valeurs mesurées pour le couple axial et le nombre de tours du dispositif de mesure du moteur, et de la valeur estimée du nombre de tours du moteur.

5. Procédé pour commander un système moteur pendant un essai des caractéristiques du moteur en commandant de manière optimale au moins une des variables commandées, en faisant usage des facteurs proportionnel, intégral et différentiel, consistant à :
spécifier les valeurs de référence prescrites pour les variables commandées ;
échantillonner les valeurs mesurées pour les variables commandées à des moments d'échantillonnage prédéterminés ;
calculer un paramètre commandé à partir des valeurs mesurées pour les variables commandées ;
calculer les différences des variables commandées entre les valeurs mesurées des variables commandées et les valeurs de référence prescrites pour les variables commandées ;
calculer les termes de l'intégrale à partir des différences des variables commandées et du paramètre commandé ;
calculer les termes proportionnels à partir du paramètre commandé et des valeurs mesurées pour les variables commandées ;
obtenir les variables commandées à partir des termes d'intégrale et des termes proportionnels, et
commander le moteur en conformité avec les variables commandées obtenues.

6. Procédé selon la revendication 5, dans lequel le système moteur comprend un moteur ayant un papillon et un dispositif de mesure du moteur ; les valeurs de référence prescrites sont spécifiées pour un nombre de tours du dispositif de mesure du moteur et un couple axial du moteur ; les valeurs mesurées sont prélevées pour un nombre de tours du moteur, le couple axial du moteur, le nombre de tours du dispositif de mesure du moteur, et l'ouverture du papillon ; le paramètre commandé est calculé à partir des valeurs mesurées pour l'ouverture du papillon et le nombre de tours du moteur ; les différences des variables commandées sont calculées entre les valeurs mesurées et les valeurs de référence prescrites pour le couple axial et le nombre de tours du dispositif de mesure du moteur ; et les termes proportionnels sont calculés à partir des valeurs mesurées pour le couple axial, le nombre de tours du moteur et le nombre de tours du dispositif de mesure du moteur.

7. Procédé selon la revendication 5, dans lequel les termes d'intégrale sont calculés en multipliant tout d'abord les différences des variables commandées et le paramètre commandé, et en effectuant ensuite l'intégration ; les termes proportionnels sont calculés en multipliant le paramètre commandé et les différences des valeurs mesurées pour les variables commandées entre l'échantillonnage courant et l'échantillonnage précédent ; et les variables commandées sont obtenues en ajoutant les termes d'intégrale et les termes proportionnels.

8. Procédé selon la revendication 5, dans lequel le système moteur comprend un moteur ayant un papillon et un dispositif de mesure du moteur ; les valeurs de référence prescrites sont spécifiées pour un nombre de tours du dispositif de mesure du moteur et un couple axial du moteur ; les valeurs mesurées sont prélevées pour le couple axial du moteur, le nombre de tours du dispositif de mesure du moteur et l'ouverture du papillon ; un nombre de tours du moteur est estimé à partir des valeurs mesurées du couple axial et du nombre de tours du dispositif de mesure du moteur, le paramètre commandé est calculé à partir des valeurs mesurées pour l'ouverture du papillon et pour la valeur estimée du nombre de tours du moteur ; les différences des variables commandées sont calculées entre les valeurs mesurées et les valeurs de référence prescrites pour le couple axial et le nombre de tours du dispositif de mesure du moteur ; et les termes proportionnels sont calculés à partir des valeurs mesurées pour le couple axial et le nombre de tours du dispositif de mesure du moteur, et la valeur estimée du nombre de tours du moteur.
